# EUROPEAN PATENT APPLICATION

(11) **EP 4 358 593 A2**
(43) Date of publication of application: **24.04.2024**
(21) Application number: 23190442.6
(22) Date of filing: 09.08.2023
(51) Int. Cl.: H04W 48/12, H04W 8/22, H04W 48/02, H04W 48/16, H04W 48/20, H04W 72/23, H04L 5/00

(54) **ACCESS MANAGEMENT FOR REDUCED CAPABILITY DEVICES**

(30) Priority: 19.10.2022 US 202263417541 P
(71) Applicant: Nokia Technologies Oy, 02610 Espoo (FI)
(72) Inventor: TURTINEN, Samuli Heikki, Ii (FI); KOSKINEN, Jussi-Pekka, Oulu (FI); RATASUK, Rapeepat, Inverness, IL (US)
(74) Representative: Nokia EPO representatives

(57) **Abstract**

Systems, methods, apparatuses, and computer program products for access management for reduced capability (RedCap) devices. A method may include acquiring system information from a cell. In some example embodiments, the system information may provide a control resource set zero configuration. The method may also include monitoring a physical downlink control channel based on the control resource set zero configuration. The method may further include receiving, from the physical downlink control channel, downlink control information that indicates a resource allocation for a system information block. In addition, the method may include determining, from the resource allocation whether the cell is barred.

## Description

### FIELD:

Some example embodiments may generally relate to mobile or wireless telecommunication systems, such as Long Term Evolution (LTE) or fifth generation (5G) new radio (NR) access technology, or beyond 5G, or other communications systems. For example, certain example embodiments may relate to apparatuses, systems, and/or methods for access management for reduced capability (RedCap) devices.

### BACKGROUND:

Examples of mobile or wireless telecommunication systems may include the Universal Mobile Telecommunications System (UMTS) Terrestrial Radio Access Network (UTRAN), LTE Evolved UTRAN (E-UTRAN), LTE-Advanced (LTE-A), MulteFire, LTE-A Pro, and/or fifth generation (5G) radio access technology or NR access technology. 5G wireless systems refer to the next generation (NG) of radio systems and network architecture. 5G network technology is mostly based on new radio (NR) technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the IoT.

### SUMMARY:

Some example embodiments may be directed to a method. The method may include acquiring system information from a cell, wherein the system information provides a control resource set zero configuration. The method may also include monitoring a physical downlink control channel based on the control resource set zero configuration. The method may further include receiving, from the physical downlink control channel, downlink control information that indicates a resource allocation for a system information block. In addition, the method may include determining, from the resource allocation whether the cell is barred.

Other example embodiments may be directed to an apparatus. The apparatus may include at least one processor and at least one memory including computer program code. The at least one memory and computer program code may also be configured to, with the at least one processor, cause the apparatus at least to acquire system information from a cell, wherein the system information provides a control resource set zero configuration. The apparatus may also be caused to monitor a physical downlink control channel based on the control resource set zero configuration. The apparatus may further be caused to receive, from the physical downlink control channel, downlink control information that indicates a resource allocation for a system information block. In addition, the apparatus may be caused to determine, from the resource allocation whether the cell is barred.

Other example embodiments may be directed to an apparatus. The apparatus may include means for acquiring system information from a cell, wherein the system information provides a control resource set zero configuration. The apparatus may also include means for monitoring a physical downlink control channel based on the control resource set zero configuration. The apparatus may further include means for receiving, from the physical downlink control channel, downlink control information that indicates a resource allocation for a system information block. In addition, the apparatus may include means for determining, from the resource allocation whether the cell is barred.

In accordance with other example embodiments, a non-transitory computer readable medium may be encoded with instructions that may, when executed in hardware, perform a method. The method may include acquiring system information from a cell, wherein the system information provides a control resource set zero configuration. The method may also include monitoring a physical downlink control channel based on the control resource set zero configuration. The method may further include receiving, from the physical downlink control channel, downlink control information that indicates a resource allocation for a system information block. In addition, the method may include determining, from the resource allocation whether the cell is barred.

Other example embodiments may be directed to a computer program product that performs a method. The method may include acquiring system information from a cell, wherein the system information provides a control resource set zero configuration. The method may also include monitoring a physical downlink control channel based on the control resource set zero configuration. The method may further include receiving, from the physical downlink control channel, downlink control information that indicates a resource allocation for a system information block. In addition, the method may include determining, from the resource allocation whether the cell is barred.

Other example embodiments may be directed to an apparatus that may include circuitry configured to acquire system information from a cell, wherein the system information provides a control resource set zero configuration. The apparatus may also include circuitry configured to monitor a physical downlink control channel based on the control resource set zero configuration. The apparatus may further include circuitry configured to receive, from the physical downlink control channel, downlink control information that indicates a resource allocation for a system information block. In addition, the apparatus may include circuitry configured to determine, from the resource allocation whether the cell is barred.

Some example embodiments may be directed to a method. The method may include receiving an intra-frequency reselection indication contained in a master information block transmitted from a cell. The method may also include determining whether an intra-frequency selection or an intra-frequency reselection is allowed or not allowed based on the intra-frequency reselection indication. The method may further include applying an intra-frequency selection or an intra-frequency reselection based on the determination.

Other example embodiments may be directed to an apparatus. The apparatus may include at least one processor and at least one memory including computer program code. The at least one memory and computer program code may also be configured to, with the at least one processor, cause the apparatus at least to receive an intra-frequency reselection indication contained in a master information block transmitted from a cell. The apparatus may also be caused to determine whether an intra-frequency selection or an intra-frequency reselection is allowed or not allowed based on the intra-frequency reselection indication. The apparatus may further be caused to apply an intra-frequency selection or an intra-frequency reselection based on the determination.

Other example embodiments may be directed to an apparatus. The apparatus may include means for receiving an intra-frequency reselection indication contained in a master information block transmitted from a cell. The apparatus may also include means for determining whether an intra-frequency selection or an intra-frequency reselection is allowed or not allowed based on the intra-frequency reselection indication. The apparatus may further include means for applying an intra-frequency selection or an intra-frequency reselection based on the determination.

In accordance with other example embodiments, a non-transitory computer readable medium may be encoded with instructions that may, when executed in hardware, perform a method. The method may include receiving an intra-frequency reselection indication contained in a master information block transmitted from a cell. The method may also include determining whether an intra-frequency selection or an intra-frequency reselection is allowed or not allowed based on the intra-frequency reselection indication. The method may further include applying an intra-frequency selection or an intra-frequency reselection based on the determination.

Other example embodiments may be directed to a computer program product that performs a method. The method may include receiving an intra-frequency reselection indication contained in a master information block transmitted from a cell. The method may also include determining whether an intra-frequency selection or an intra-frequency reselection is allowed or not allowed based on the intra-frequency reselection indication. The method may further include applying an intra-frequency selection or an intra-frequency reselection based on the determination.

Other example embodiments may be directed to an apparatus that may include circuitry configured to receive an intra-frequency reselection indication contained in a master information block transmitted from a cell. The apparatus may also include circuitry configured to determine whether an intra-frequency selection or an intra-frequency reselection is allowed or not allowed based on the intra-frequency reselection indication. The apparatus may further include circuitry configured to apply an intra-frequency selection or an intra-frequency reselection based on the determination.

Certain example embodiments may be directed to a method. The method may include transmitting to a user equipment, system information comprising a control resource set zero configuration. The method may also include setting a frequency domain resource assignment field in a downlink control information based on whether cell access for the user equipment is barred or allowed, or whether a network element supports the user equipment. The method may further include transmitting, to the user equipment, the downlink control information that indicates a resource allocation for a system information block based on the control resource set zero configuration.

Other example embodiments may be directed to an apparatus. The apparatus may include at least one processor and at least one memory including computer program code. The at least one memory and computer program code may be configured to, with the at least one processor, cause the apparatus at least to transmit, to a user equipment, system information comprising a control resource set zero configuration. The apparatus may also be caused to set a frequency domain resource assignment field in a downlink control information based on whether cell access for the user equipment is barred or allowed, or whether the apparatus supports the user equipment;. The apparatus may further be caused to transmit, to the user equipment, the downlink control information that indicates a resource allocation for a system information block based on the control resource set zero configuration.

Other example embodiments may be directed to an apparatus. The apparatus may include means for transmitting, to a user equipment, system information comprising a control resource set zero configuration. The apparatus may also include means for setting a frequency domain resource assignment field in a downlink control information based on whether cell access for the user equipment is barred or allowed, or whether the apparatus supports the user equipment. The apparatus may further include means for transmitting, to the user equipment, the downlink control information that indicates a resource allocation for a system information block based on the control resource set zero configuration.

In accordance with other example embodiments, a non-transitory computer readable medium may be encoded with instructions that may, when executed in hardware, perform a method. The method may include transmitting to a user equipment, system information comprising a control resource set zero configuration. The method may also include setting a frequency domain resource assignment field in a downlink control information based on whether cell access for the user equipment is barred or allowed, or whether a network element supports the user equipment. The method may further include transmitting, to the user equipment, the downlink control information that indicates a resource allocation for a system information block based on the control resource set zero configuration.

Other example embodiments may be directed to a computer program product that performs a method. The method may include transmitting to a user equipment, system information comprising a control resource set zero configuration. The method may also include setting a frequency domain resource assignment field in a downlink control information based on whether cell access for the user equipment is barred or allowed, or whether a network element supports the user equipment. The method may further include transmitting, to the user equipment, the downlink control information that indicates a resource allocation for a system information block based on the control resource set zero configuration.

Other example embodiments may be directed to an apparatus that may include circuitry configured to transmit, to a user equipment, system information comprising a control resource set zero configuration. The apparatus may also include circuitry configured to set a frequency domain resource assignment field in a downlink control information based on whether cell access for the user equipment is barred or allowed, or whether the apparatus supports the user equipment. The apparatus may further include circuitry configured to transmit, to the user equipment, the downlink control information that indicates a resource allocation for a system information block based on the control resource set zero configuration.

### BRIEF DESCRIPTION OF THE DRAWINGS:

For proper understanding of example embodiments, reference should be made to the accompanying drawings, wherein:
FIG. 1 illustrates an example flow diagram, according to certain example embodiments.
FIG. 2 illustrates an example flow diagram of a method, according to certain example embodiments.
FIG. 3 illustrates an example flow diagram of another method, according to certain example embodiments.
FIG. 4 illustrates an example flow diagram of a further method, according to certain example embodiments.
FIG. 5 illustrates a set of apparatuses, according to certain example embodiments.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for access management for RedCap devices. For instance, certain example embodiments may be directed to managing access for reduced capability devices.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", "network" or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

As described in the technical specifications of 3^{rd} Generation Partnership Project (3GPP), 5G aims to accelerate industrial transformation and digitalization, which may improve flexibility enhance productivity and efficiency, reduce maintenance, and improve operational safety. Industrial sensors may play an important role for achieve this goal, and are widely used in the general environmental monitoring use cases such as monitoring of critical infrastructure (e.g., buildings, bridges, water dams, etc.), or monitoring for natural disasters (e.g., wild fire, flood, tsunami, earthquake, etc.). Another emerging new class of new 5G use cases may include the smart city vertical, which covers data collection and processing to more efficiently monitor and control city resources, and to provide services to city residents. Furthermore, wearables use cases such as smart watches, eHealth related devices, and medical monitoring devices call for different design considerations and have different requirements in terms of form factor, user equipment (UE) complexity and energy efficiency, compared to enhanced mobile broadband (eMBB) devices.

In view of the above, 3GPP has established a framework for enabling reduced capability NR devices suitable for a range of use cases, including the industrial sensors, video surveillance, and wearables use cases, with requirements on low UE complexity and sometimes also on low UE power consumption. To further expand the market for RedCap use cases with relatively low cost, low energy consumption, and low data rate requirements, e.g., industrial wireless sensor network use cases, some further complexity reduction enhancements should be considered.

In 3GPP Rel-17, RedCap UE support reduced bandwidth (BW) of 20 MHz in Frequency Range 1. In Rel-18, 3GPP is looking at further complexity reduction for RedCap UE. This includes further BW reduction where the UE supports up to 20 MHz radio frequency (RF) BW for both uplink (UL) and downlink (DL), but only 5 MHz baseband (BB) bandwidth for the physical downlink shared channel (PDSCH)/physical uplink shared channel (PUSCH). All other channels and signals can still use up to 20 MHz (i.e. no change compared to Rel-17 RedCap UE. Another complexity reduction technique includes limiting the maximum number of resource blocks (either physical or virtual) that can be used (either for transmission or reception) by the RedCap UE.

RedCap UEs with a 1 Rx branch and 2 Rx branches may be separately allowed via system information. In addition, half-duplex frequency division duplex (FDD) mode may be allowed via system information. A RedCap specific intra-frequency reselection indicator or indication (IFRI) may be provided in a system information block type 1 (SIB1). However, when SIB1 is absent, the RedCap UEs may not be allowed access. In some examples, information on which frequencies a RedCap UE access is allowed may be provided in system information, and cell barring for RedCap devices may be explicitly indicated over system information in SIB1.

Upon cell search and selection, a RedCap UE may attempt to camp on a cell which does not support a new RedCap UE (for example, Rel-18 RedCap UE or RedCap UE with further complexity reduction) with only 5 MHz bandwidth supported for PDSCH and PUSCH. For instance, the UE may acquire a master information block (MIB), and attempt to decode SIB1 since the UE can support 20 MHz physical downlink control channel (PDCCH) BW. Thus, the UE may be able to support the control resource set (CORESET) #0 BW provided over MIB for the cell. However, this may not ensure the camping possibility of the UE in the cell given the reduced PDSCH BW or resource block allocation support. As such, there is a problem of how the UE should behave in different scenarios. Thus, as described herein certain example embodiments may define UE behavior for when the UE can attempt to decode the SIB1 of the cell while the cell may not support the new UE type with reduced PDSCH/PUSCH (baseband) BW or reduced PDSCH/PUSCH resource block allocation support, or the cell is not enabled for it.

According to certain example embodiments, the RedCap UE with reduced PDSCH/PUSCH BW or resource block allocation support may attempt to acquire SIB1 by determining a PDSCH BW or allocated resource blocks of the SIB1 based on downlink control information (DCI) provided by the cell (e.g., gNB) over a PDCCH scheduling the SIB1 (i.e., DCI format 1_0 with cyclic redundancy check (CRC) scrambled by a system information radio network temporary identifier (SI-RNTI). According to other example embodiments, when attempting to acquire SIB1, the RedCap UE may determine different behavior based on the PDSCH BW (i.e. the PDSCH frequency domain resource) or number of PDSCH resource blocks allocated for SIB1 in the DCI. Further, in some example embodiments, the determination of different behavior may be based on the frequency domain resource assignment (FRDA) field in the DCI.

In certain example embodiments, if the RedCap UE determines that the DCI scheduled or allocated PDSCH BW or number of resource blocks allocated for PDSCH of the SIB1 is beyond the supported PDSCH BW or number of resource blocks of the RedCap UE, the RedCap UE may consider, treat, and/or set the cell as barred. For example, the RedCap UE may determine to be unable to acquire the SIB1 due to the DCI scheduled or allocated PDSCH BW or number of resource blocks allocated for PDSCH of the SIB1 being beyond the supported PDSCH BW or number of resource blocks of the RedCap UE. Additionally, in some example embodiments, the RedCap UE may consider the cell as barred for a certain period of time such as, for example, up to 300 seconds. According to other example embodiments, if the RedCap UE determines that the DCI scheduled, allocated, or otherwise indicated PDSCH BW of the SIB1 is within the supported PDSCH BW of the RedCap UE, the RedCap UE may acquire the SIB1 to determine whether access to the cell is allowed or barred. For instance, SIB1 may provide a dedicated indication for the RedCap UE to determine if the access to the cell is allowed or barred. Alternatively, in other example embodiments, the RedCap UE may determine if cell access is allowed or barred using reserved bits in the DCI. According to certain example embodiments, the reserved bits may be used together with the FDRA field as described above. For instance, new gNBs may take advantage of the reserved bits in the DCI to signal cell access allowance/barring to the RedCap UEs. For instance, certain reserved bit may be allocated to indicate the allowance/barring of the RedCap UE in the cell.

According to certain example embodiments, the RedCap UE may apply or perform an intra-frequency (re-)selection differently on whether the determined DCI scheduled PDSCH BW of the SIB1 is beyond the supported PDSCH BW of the UE, or whether the determined DCI scheduled PDSCH BW of the SIB1 is within the supported PDSCH BW of the RedCap UE but the RedCap UE is unable to acquire the SIB1. In this case, according to some example embodiments, the RedCap UE may treat the intra-frequency (re-)selection as allowed or not allowed when the DCI scheduled PDSCH BW of the SIB1 is beyond the supported PDSCH BW of the UE. However, in other example embodiments, the RedCap UE may treat the intra-frequency (re-)selection as allowed or not allowed or based on the IFRI or related information provided over MIB when the DCI scheduled PDSCH BW of the SIB1 is within the supported PDSCH BW of the UE. According to other example embodiments, the RedCap UE may apply the IFRI from the MIB in both scenarios of when the DCI scheduled PDSCH BW of the SIB1 is beyond or within the supported PDSCH BW of the UE. According to further example embodiments, intra-frequency (re-)selection information may be signaled in the reserved bits of the DCI for the RedCap UE.

In certain example embodiments, the RedCap UE with reduced PDSCH/PUSCH BW support (e.g., support for up to 5MHz PDSCH/PUSCH BW) may ignore cell barred information in the MIB. By ignoring the cell barred information, the NW may be able to allow the RedCap UE on the cell by scheduling SIBs using up to 5 MHz BW. For example, the NW may enable the RedCap UE only cells by RedCap UE ignoring the cell barred information in the MIB. In other example embodiments, the RedCap UE with reduced PDSCH/PUSCH BW support may ignore intraFreqReselection information in the MIB. In further example embodiments, the RedCap UE with reduced PDSCH/PUSCH BW may consider intraFreqReselection information as allowed regardless of what is actually signaled in the MIB. Additionally, in some example embodiments, when the RedCap UE has determined that access to the cell is not allowed, or the cell is to be treated/considered/set as barred according to the above example embodiments, the UE may select another cell on the same frequency or different frequency if reselection criteria are fulfilled. For example, the reselection criteria may involve one or more of cell selection RX value (dB), cell selection quality value (dB), offset temporarily applied to a cell (dB), measured cell RX level (RSRP), measured cell quality value (RSRQ), minimum required RX level in the cell (dBm), minimum required quality level in the cell (dB), etc.

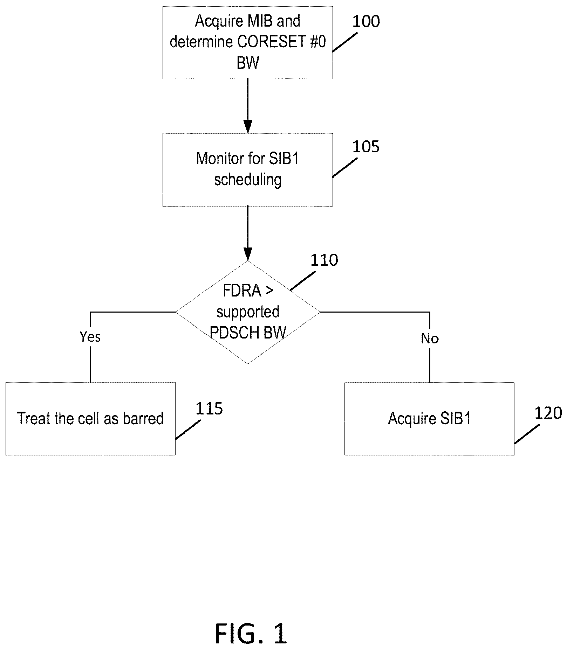

FIG. 1 illustrates an example flow diagram according to certain example embodiments. In particular, FIG. 1 illustrates a flow diagram of operations performed by the RedCap UE, according to certain example embodiments. At 100, the RedCap UE may acquire a MIB and determine CORESET #0 BW based on the MIB. At 105, the RedCap UE may monitor for SIB1 scheduling or indications from PDCCH. For example, the RedCap UE may attempt to decode DCI scrambled by SI-RNTI from the PDCCH. At 110, the RedCap UE may determine whether FDRA in the DCI provides PDSCH BW greater than the supported PDSCH BW of the RedCap UE. If the PDSCH BW based on the FRDA is greater, then, at 115, the RedCap UE may treat, consider, and/or set the cell as barred. However, if the PDSCH BW based on the FRDA is less than the supported PDSCH BW, the RedCap UE may, at 120, acquire SIB1 to determine if access to the cell is allowed.

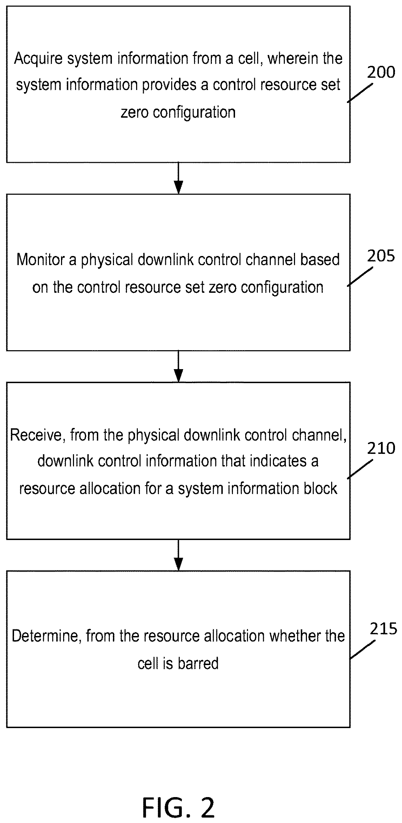

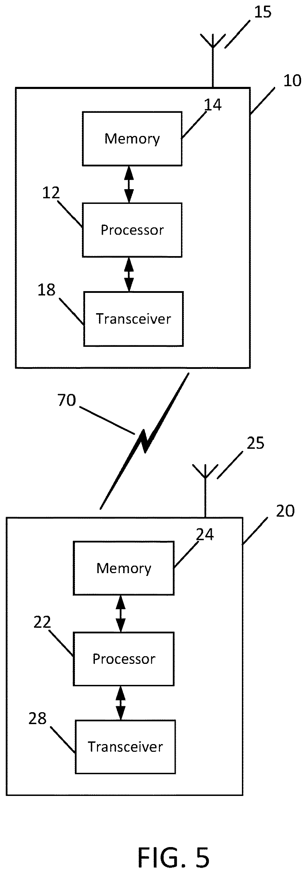

FIG. 2 illustrates an example flow diagram of a method, according to certain example embodiments. In an example embodiment, the method of FIG. 2 may be performed by a network entity, or a group of multiple network elements in a 3GPP system, such as LTE or 5G-NR. For instance, in an example embodiment, the method of FIG. 2 may be performed by a UE similar to one of apparatuses 10 or 20 illustrated in FIG. 5.

According to certain example embodiments, the method of FIG. 2 may include, at 200, acquiring system information from a cell. In some example embodiments, the system information may provide a control resource set zero configuration. The method may also include, at 205, monitoring a physical downlink control channel based on the control resource set zero configuration. The method may further include, at 210, receiving, from the physical downlink control channel, downlink control information that indicates a resource allocation for a system information block. In addition, the method may include, at 215, determining, from the resource allocation whether the cell is barred.

According to certain example embodiments, the system information may be acquired via a master information block of the cell. According to some example embodiments, the method may also include determining a bandwidth of the resource allocation from a frequency domain resource assignment field in the downlink control information. According to other example embodiments, the bandwidth of the resource allocation may be a physical downlink shared channel bandwidth. According to further example embodiments, the method may include, when a bandwidth of the resource allocation is beyond a supported frequency bandwidth of a user equipment, treating or considering the cell as barred.

In certain example embodiments, the cell may be considered as barred for a predetermined amount of time. In other example embodiments, the method may also include selecting a different cell to access when the cell is determined as barred. In some example embodiments, the different cell and the cell may be on a same or a different frequency. In further example embodiments, the method may also include, when a bandwidth of the resource allocation is within a supported frequency bandwidth of the user equipment, determining, based on the system information block, whether access to the cell is allowed or barred.

According to certain example embodiments, the method may also include considering intra-frequency reselection as allowed. According to other example embodiments, when the system information block cannot be acquired, the method may include applying or performing an intra-frequency selection or an intra-frequency reselection based on whether a bandwidth of the resource allocation is beyond a supported frequency bandwidth of the apparatus, or whether the bandwidth of the resource allocation is within the supported frequency bandwidth of the apparatus. According to some example embodiments, the method may further include, when the bandwidth of the resource allocation is beyond the supported frequency bandwidth of the apparatus, treating or considering the intra-frequency selection or the intra-frequency reselection as not allowed.

In certain example embodiments, the method may also include, when the bandwidth of the resource allocation is within the supported frequency bandwidth of the apparatus, treating or considering the intra-frequency selection or the intra-frequency reselection as allowed. In some example embodiments, the method may further include receiving an intra-frequency reselection indication from a master information block. In other example embodiments, the method may include receiving, from the cell, intra-frequency selection information or intra-frequency reselection information. In further example embodiments, the method may include considering that intra-frequency reselection is allowed regardless of what is actually signaled in a master information block or the system information block. In some example embodiments, the method may further include ignoring an intra-frequency reselection indication contained in a master information block. According to some example embodiments, the method may further include ignoring cell-barred information in a master information block.

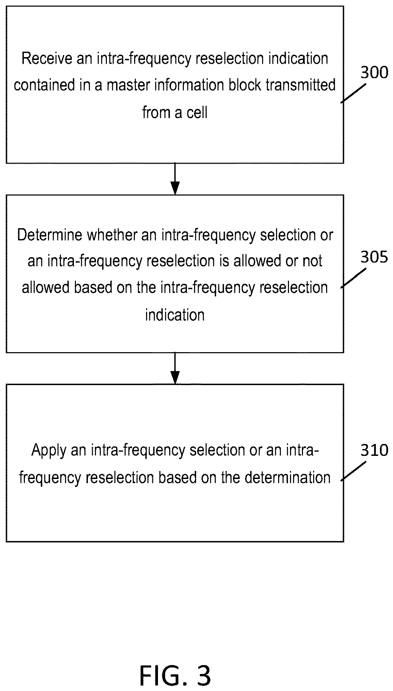

FIG. 3 illustrates an example flow diagram of another method, according to certain example embodiments. In an example embodiment, the method of FIG. 3 may be performed by a network entity, or a group of multiple network elements in a 3GPP system, such as LTE or 5G-NR. For instance, in an example embodiment, the method of FIG. 3 may be performed by a UE similar to one of apparatuses 10 or 20 illustrated in FIG. 5.

According to certain example embodiments, the method of FIG. 3 may include, at 300, receiving an intra-frequency reselection indication contained in a master information block transmitted from a cell. The method may also include, at 305, determining whether an intra-frequency selection or an intra-frequency reselection is allowed or not allowed based on the intra-frequency reselection indication. The method may further include, at 310, applying or performing an intra-frequency selection or an intra-frequency reselection based on the determination.

According to certain example embodiments, the method may also include receiving, from the cell, intra-frequency selection information or intra-frequency reselection information. According to other example embodiments, the method may further include considering that intra-frequency reselection is allowed regardless of what is actually signaled in the master information block. According to some example embodiments, the method may also include ignoring the intra-frequency reselection indication contained the master information block. In certain example embodiments, the method may further include ignoring cell-barred information in the master information block.

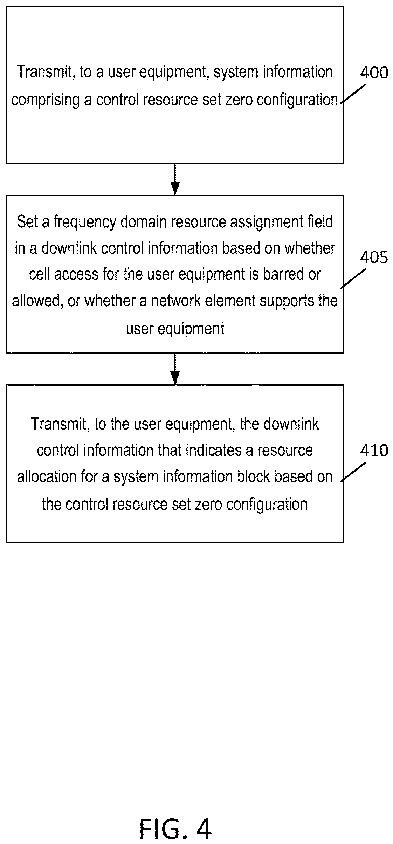

FIG. 4 illustrates an example of a flow diagram of another method, according to certain example embodiments. In an example embodiment, the method of FIG. 4 may be performed by a network entity, or a group of multiple network elements in a 3GPP system, such as LTE or 5G-NR. For instance, in an example embodiment, the method of FIG. 4 may be performed by a network, cell, gNB, or any other device similar to one of apparatuses 10 or 20 illustrated in FIG. 5.

According to certain example embodiments, the method of FIG. 4 may include, at 400, transmitting, to a user equipment, system information comprising a control resource set zero configuration. The method may also include, at 405, setting a frequency domain resource assignment field in a downlink control information based on whether cell access for the user equipment is barred or allowed, or whether a network element supports the user equipment (e.g., whether the network element supports a RedCap UE, such as a Rel-18 RedCap UE, and/or the like). The method may further include, at 410, transmitting, to the user equipment, the downlink control information that indicates a resource allocation for a system information block based on the control resource set zero configuration.

According to certain example embodiments, the user equipment may be a reduced capability user equipment with reduced bandwidth capabilities. According to some example embodiments, a frequency domain resource assignment in the frequency domain resource assignment field may indicate a bandwidth of the resource allocation that is within a supported bandwidth of the user equipment. According to other example embodiments, the method may further include, when a bandwidth of the resource allocation is within a supported bandwidth of the user equipment, signaling in the system information block whether access to the apparatus is allowed. According to further example embodiments, the method may also include, when cell access is allowed for the user equipment, setting one or more reserved bits in the downlink control information, and transmitting, to the user equipment via the one or more reserved bits, cell access allowance information.

In certain example embodiments, the method may also include setting, in a master information block, an intra-frequency reselection indication based on whether intra-frequency selection or intra-frequency reselection is allowed. In some example embodiments, the method may also include transmitting, to the user equipment, intra-frequency selection or intra-frequency reselection information in the one or more reserved bits of the downlink control information. In other example embodiments, the method may also include determining that cell-barred information contained in the master information block was ignored, determining that the intra-frequency reselection indication in the master information block was ignored, and transmitting, in response to the determination that the cell-barred information and the intra-frequency reselection indication were ignored, the cell-barred information in the system information block.

FIG. 5 illustrates a set of apparatuses 10 and 20 according to certain example embodiments. In certain example embodiments, the apparatus 10 may be an element in a communications network or associated with such a network, such as a UE, mobile equipment (ME), mobile station, mobile device, stationary device, IoT device, or other device. It should be noted that one of ordinary skill in the art would understand that apparatus 10 may include components or features not shown in FIG. 5.

In some example embodiments, apparatus 10 may include one or more processors, one or more computer-readable storage medium (for example, memory, storage, or the like), one or more radio access components (for example, a modem, a transceiver, or the like), and/or a user interface. In some example embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 5, apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 5, multiple processors may be utilized according to other example embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes and examples illustrated in FIGs. 1-3.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In certain example embodiments, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods and examples illustrated in FIGs. 1-3.

In some example embodiments, apparatus 10 may also include or be coupled to one or more antennas 15 for receiving a downlink signal and for transmitting via an UL from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an UL.

For instance, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some example embodiments, apparatus 10 may include an input and/or output device (I/O device). In certain example embodiments, apparatus 10 may further include a user interface, such as a graphical user interface or touchscreen.

In certain example embodiments, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to certain example embodiments, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some example embodiments, transceiver 18 may be included in or may form a part of transceiving circuitry.

For instance, in certain example embodiments, apparatus 10 may be controlled by memory 14 and processor 12 to acquire system information from a cell. According to certain example embodiments, the system information may provide a control resource set zero configuration. Apparatus 10 may also be controlled by memory 14 and processor 12 to monitor a physical downlink control channel based on the control resource set zero configuration. Apparatus 20 may further be controlled by memory 14 and processor 12 to receive, from the physical downlink control channel, downlink control information that indicates a resource allocation for a system information block. In addition, apparatus 20 may be controlled by memory 14 and processor 12 to determine, from the resource allocation whether the cell is barred.

In other example embodiments, apparatus 10 may be controlled by memory 14 and processor 12 to receive an intra-frequency reselection indication contained in a master information block transmitted from a cell. Apparatus 10 may further be controlled by memory 14 and processor 12 to determine whether an intra-frequency selection or an intra-frequency reselection is allowed or not allowed based on the intra-frequency reselection indication. In addition, apparatus 10 may be controlled by memory 14 and processor 12 to apply or perform an intra-frequency selection or an intra-frequency reselection based on the determination.

As illustrated in the example of FIG. 5, apparatus 20 may be a network, core network element, or element in a communications network or associated with such a network, such as a gNB, or NW. It should be noted that one of ordinary skill in the art would understand that apparatus 20 may include components or features not shown in FIG. 5.

As illustrated in the example of FIG. 5, apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 5, multiple processors may be utilized according to other example embodiments. For example, it should be understood that, in certain example embodiments, apparatus 20 may include two or more processors that may form a multiprocessor system (e.g., in this case processor 22 may represent a multiprocessor) that may support multiprocessing. In certain example embodiments, the multiprocessor system may be tightly coupled or loosely coupled (e.g., to form a computer cluster).

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes and examples illustrated in FIGs. 1 and 4.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In certain example embodiments, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods and examples illustrated in FIGs. 1 and 4.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an UL).

As such, transceiver 28 may be configured to modulate information on to a carrier waveform for transmission by the antenna(s) 25 and demodulate information received via the antenna(s) 25 for further processing by other elements of apparatus 20. In other example embodiments, transceiver 18 may be capable of transmitting and receiving signals or data directly. Additionally or alternatively, in some example embodiments, apparatus 20 may include an input and/or output device (I/O device).

In certain example embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some example embodiments, processor 22 and memory 24 may be included in or may form a part of processing circuitry or control circuitry. In addition, in some example embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

For instance, in certain example embodiments, apparatus 20 may be controlled by memory 24 and processor 22 to transmit, to a user equipment, system information comprising a control resource set zero configuration. Apparatus 20 may also be controlled by memory 24 and processor 22 to set a frequency domain resource assignment field in a downlink control information based on whether cell access for the user equipment is barred or allowed, or whether the apparatus supports the user equipment (e.g., whether the apparatus 20 supports a RedCap UE, such as a Rel-18 RedCap UE, and/or the like). Apparatus 20 may further be controlled by memory 24 and processor 22 to transmit, to the user equipment, the downlink control information that indicates a resource allocation for a system information block based on the control resource set zero configuration.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for acquiring system information from a cell, wherein the system information provides a control resource set zero configuration. The apparatus may also include means for monitoring monitor a physical downlink control channel based on the control resource set zero configuration. The apparatus may further include means for receiving, from the physical downlink control channel, downlink control information that indicates a resource allocation for a system information block. In addition, the apparatus may include means for determining, from the resource allocation whether the cell is barred.

Certain example embodiments may also be directed to an apparatus that includes means for receiving an intra-frequency reselection indication contained in a master information block transmitted from a cell. The apparatus may also include means for determining whether an intra-frequency selection or an intra-frequency reselection is allowed or not allowed based on the intra-frequency reselection indication. The apparatus may further include means for applying or performing an intra-frequency selection or an intra-frequency reselection based on the determination.

Certain example embodiments may also be directed to an apparatus that includes means for transmitting, to a user equipment, system information comprising a control resource set zero configuration. The apparatus may also include means for setting a frequency domain resource assignment field in a downlink control information based on whether cell access for the user equipment is barred or allowed, or whether the apparatus supports the user equipment (e.g., whether the apparatus supports a RedCap UE, such as a Rel-18 RedCap UE, and/or the like). The apparatus may further include means for transmitting, to the user equipment, the downlink control information that indicates a resource allocation for a system information block based on the control resource set zero configuration.

Certain example embodiments described herein provide several technical improvements, enhancements, and /or advantages. For instance, in some example embodiments, it may be possible to provide definitive UE behavior defined for when the UE can attempt to decode the SIB1 of the cell while the cell may not support the new UE type with reduced PDSCH/PUSCH BW, or the cell is not enabled for it. In other example embodiments, the UE may determine if the cell is barred without having to read SIB1.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example.

Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- 5GCN: 5G Core Network
- 5GS: 5G System
- BS: Base Station
- BW: Bandwidth
- CORESET: Control Resource Set
- DCI: Downlink Control Information
- DL: Downlink
- eNB: Enhanced Node B
- E-UTRAN: Evolved UTRAN
- FDRA: Frequency Domain Resource Allocation
- gNB: 5G or Next Generation NodeB
- IFRI: Intra-frequency Reselection Indicator or Indication
- LTE: Long Term Evolution
- MIB: Master Information Block
- NR: New Radio
- NW: Network
- PDCCH: Physical Downlink Control Channel
- PDSCH: Physical Downlink Shared Channel
- PUSCH: Physical Uplink Shared Channel
- RedCap: Reduced Capability
- RRC: Radio Resource Control
- SIB1: System Information Block Type 1
- SI-RNTI: System Information Radio Network Temporary Identifier
- UE: User Equipment
- UL: Uplink

## Claims

1. An apparatus, comprising:
means for acquiring system information from a cell, wherein the system information provides a control resource set zero configuration;
means for monitoring a physical downlink control channel based on the control resource set zero configuration;
means for receiving, from the physical downlink control channel, downlink control information that indicates a resource allocation for a system information block; and
means for determining, from the resource allocation whether the cell is barred.

2. The apparatus according to claim 1, further comprising:
means for determining a bandwidth of the resource allocation from a frequency domain resource assignment field in the downlink control information.

3. The apparatus according to any of claims 1-2, wherein the bandwidth of the resource allocation is a physical downlink shared channel bandwidth.

4. The apparatus according to any of claims 1-3, further comprising:
when a bandwidth of the resource allocation is beyond a supported frequency bandwidth of the apparatus, means for treating or considering the cell as barred.

5. The apparatus according to any of claims 1-2, further comprising:
when a bandwidth of the resource allocation is within a supported frequency bandwidth of the apparatus, means for determining, based on the system information block, whether access to the cell is allowed or barred.

6. The apparatus according to any of claims 1-5, wherein when the system information block cannot be acquired, the method further comprises:
means for applying an intra-frequency selection or an intra-frequency reselection based on whether a bandwidth of the resource allocation is beyond a supported frequency bandwidth of the apparatus, or whether the bandwidth of the resource allocation is within the supported frequency bandwidth of the apparatus.

7. The apparatus according to claim 1, further comprising:
means for ignoring cell-barred information in a master information block.

8. An apparatus, comprising:
means for receiving an intra-frequency reselection indication contained in a master information block transmitted from a cell;
means for determining whether an intra-frequency selection or an intra-frequency reselection is allowed or not allowed based on the intra-frequency reselection indication; and
means for applying an intra-frequency selection or an intra-frequency reselection based on the determination.

9. The apparatus according to claim 8, further comprising:
means for receiving, from the cell, intra-frequency selection information or intra-frequency reselection information.

10. The apparatus according to any of claims 8-9, further comprising:
means for ignoring the intra-frequency reselection indication contained the master information block.

11. An apparatus, comprising:
means for transmitting, to a user equipment, system information comprising a control resource set zero configuration;
means for setting a frequency domain resource assignment field in a downlink control information based on whether cell access for the user equipment is barred or allowed, or whether the apparatus supports the user equipment; and
means for transmitting, to the user equipment, the downlink control information that indicates a resource allocation for a system information block based on the control resource set zero configuration.

12. The apparatus according to claim 11, wherein a frequency domain resource assignment in the frequency domain resource assignment field indicates a bandwidth of the resource allocation that is within a supported bandwidth of the user equipment.

13. The apparatus according to any of claims 11-12, further comprising:
when a bandwidth of the resource allocation is within a supported bandwidth of the user equipment, means for signaling in the system information block whether access to a cell is allowed.

14. The apparatus according to any of claims 11-12, further comprising:
when cell access is allowed for the user equipment, means for setting one or more reserved bits in the downlink control information; and
means for transmitting, to the user equipment via the one or more reserved bits, cell access allowance information.

15. The apparatus according to any of claims 11-14, further comprising:
means for setting, in a master information block, an intra-frequency reselection indication based on whether intra-frequency selection or intra-frequency reselection is allowed.
